# EUROPEAN PATENT APPLICATION

(11) **EP 1 854 841 A1**
(43) Date of publication of application: **14.11.2007**
(21) Application number: 06252421.0
(22) Date of filing: 08.05.2006
(51) Int. Cl.: C08L 23/08, C08J 5/18, B32B 27/32

(54) **Film**

(71) Applicant: Borealis Technology Oy, 06101 Porvoo (FI)
(72) Inventor: Nilsen, Jorunn, 3930, Porsgrunn (NO); Kvamme, Lars, Inge, 3970 langesund (NO); Daviknes, Hans, Georg, Stathelle (NO); Helland, Irene, 3912, Porsgrunn (NO)
(74) Representative: Campbell, Neil Boyd

(57) **Abstract**

A film, e.g. a monolayer film or multilayer, or a polymer composition comprising at least one single site produced LLDPE (mLLDPE) and an ethylene acrylate copolymer.

## Description

This invention relates to a film with excellent optical and mechanical properties which can be formed into stretch hoods. In particular, the invention concerns a particular combination of a linear low density polyethylene polymer (LLDPE) and ethylene acrylate copolymer in the form of a blend or a multilayer film with one layer comprising LLDPE and the other layer comprising said ethylene acrylate copolymer. The blend or film exhibits excellent holding force and elasticity whilst possessing unexpectedly high impact resistance, particularly puncture resistance.

Throughout the World, millions of tons of goods are shipped on pallets that can be readily moved around from transport vehicle into warehouses and on to, for example, the shop floor using fork lift trucks and the like. In order to prevent damage to the goods being shipped and prevent goods from falling off the pallet, the goods on the pallet are typically wrapped in polyolefin film.

Various methods of wrapping loaded pallets in film have been devised. The use of shrink films to wrap goods on a pallet is well known but suffers from the disadvantage that raw material costs are high and the use of heat to shrink the film is expensive and potentially hazardous. Moreover, heat shrinking film might not be an option where the goods being packaged are heat sensitive.

Pallets are also wrapped therefore in conventional stretch films which can be wrapped around the pallet manually or using a machine. A loaded pallet is typically placed on a rotating turntable to allow easy application of the film around the pallet. This process is time consuming however, and is also wasteful of raw material as inevitably, parts of the pallet are covered in thick layers of film whilst other parts have thinner layers. Where the pallet is covered by thick films layers, it is also difficult to remove the stretch film at the pallet's destination.

A further disadvantage of the use of a simple stretch film is that at the end of the wrapping operation, there remains a loose end that has to be secured in some way to the pallet. This can be achieved using an adhesive but this adds further cost and time to the wrapping procedure.

The industry thus seized upon the use of stretch hoods to wrap loaded pallets. Stretch hoods are stretchable tubular polyolefin film that can be stretched over a loaded pallet. Once the pallet is covered, the stretch hood contracts and this contraction is sufficient to protect the goods on the pallet from damage during transit and prevents goods from falling from the pallet.

Pallet stretch hoods offer numerous practical and economic advantages over the methods described above. The cycle time of applying a stretch hood to a pallet is significantly shorter than the cycle time of wrapping a loaded pallet with a stretch film. Moreover, no adhesive is required to secure a pallet stretch hood. In addition, the use of a stretch hood reduces the waste of raw material resulting form overlapping layers of stretch film.

Stretch hoods are known in the art and typically comprise ethylene vinyl acetate polymers to bring elasticity. Such polymers can however, be insufficiently elastic to act as stretch hoods, i.e. the contraction of the film is insufficient to safely package the pallet load. A significant problem with such polymers is a relatively low puncture resistance which leads to easy damage of the film and the products that is covered on the palette.

In WO2006/023566, an alternative stretch hood composition is suggested which contains a polyolefin, an ethylene acid copolymer such as ethylene methacrylic acid and ethylene methyl acrylate. Hoods made from these materials are allegedly more elastic than those previously known. The stretch hoods of WO2006/023566 however, employ two polar components and a polyolefin selected from a long list of different alternatives.

There remains therefore, a continuous need for further solutions for film materials suitable for stretch hood applications with alternative property balance. Thus, the object of the present invention is to provide an alternative film material with excellent mechanical properties, particularly puncture resistance, whilst maintaining the necessary elasticity.

A further object is to develop a film that can operate within a broad temperature window, e.g. at the high temperatures which can occur in a transport vehicle on a hot day as well as being capable of being frozen in an articulated vehicle or warehouse freezer. Moreover, there is a continuous need for a film which can be used on a variety of stretch hood application machines.

The present inventors have now found that a particular combination of a linear low density polyethylene produced using a single site, preferably metallocene, catalyst (herein referred to as an mLLDPE) and an ethylene acrylate copolymer can be used as a blend to provide a film, e.g. a multilayered structure as defined below, which can be used to form stretch hoods which possess excellent elasticity and puncture resistance. Preferably the combination of the invention may further provide a film with one or more of the following properties, namely excellent holding force and/or advantageous penetration distance and energy to break in the puncture resistance test. The film material combination further preferably may result in further advantageous properties, namely good optical properties, e.g. good transparency, and the film material is capable of operating at low and high temperatures and can be produced consistently for application by a variety of stretch hood application machines.

Thus, viewed from one aspect, the invention provides a film comprising at least one single site produced LLDPE and an ethylene acrylate copolymer. Preferably, the invention provides a multilayer film comprising at least two layers, an outer layer and a core layer;
said outer layer comprising at least one single site produced LLDPE polymer; and
said core layer comprising an ethylene acrylate copolymer.

Viewed from another aspect the invention provides a process for the preparation of a multilayer film as hereinbefore described comprising coextruding
A) a composition comprising at least one single site catalyst produced LLDPE polymer to form an outer layer; and
B) a composition comprising an ethylene acrylate copolymer to form a core layer.

Viewed from another aspect the invention provides use of a film as hereinbefore described in packaging. Viewed from a further aspect the invention provides an article packaged using said film.

Viewed from another aspect the invention provides a stretch hood formed from said film.

The polymers of use in this invention may also be used to form advantageous monolayer films. Thus, viewed from another aspect the invention provides a monolayer film comprising at least one single site produced LLDPE and an ethylene acrylate copolymer.

The combination of polymers of use in the invention is also new and forms a further aspect of the invention. Thus, viewed from a still further aspect the invention provides a composition comprising at least one single site produced LLDPE and an ethylene acrylate copolymer, optionally further comprising at least one Ziegler-Natta produced LLDPE, (herein referred also as BLEND).

The multilayer film of the invention has at least two layers, e.g. 2, 3, 5, 7 or 11 layers. Preferably the multilayer film has at least 3 layers. Preferably, the core layer (B) is sandwiched between at least two other layers, an outer layer (A) and an inner layer (C). Ideally, the two layers present on the surface of the formed film are the outer layer and the inner layer. Preferably, the core layer (B) is not outermost, i.e. the core layer is not on either surface of the formed film. Preferably, the film should comprise only three layers, an outer layer (A), an inner layer (C)and a core layer (B) sandwiched therebetween.

When present, the outer (A) and inner (C) layers, which may form the external surfaces of the multilayer film, may have differing compositions although preferably these layers should be identical. A preferred film structure is therefore ABA, where each A is an identical outer/inner layer and B is the core layer.

The outer layer (A), and preferably also the inner layer (C), when present, comprises at least one single site catalyst produced linear low density polyethylene polymer (LLDPE). In the passages which follow, the properties of the outer layer are described, but said properties apply equally also for the inner layer (C) when present. It is also noted that the properties given below for the polymer components of the invention apply equally also for the BLEND of the invention.

The outer layer may comprise at least 50 wt% of single site catalyst produced LLDPE polymer, preferably at least 60% wt, more preferably at least 70 wt%, especially at least 80wt% single site catalyst produced LLDPE. The outer layer can comprise other polymer components, such as another LLDPE having the density 940 kg/m³ or less, a non LLDPE polymer component(s) such as low density polyethylene (LDPE), other polyethylene polymers with density more than 940 kg/m³ such as high density polyethylene (HDPE) or an ethylene acrylate copolymer, e.g. as described in detail below. If present, such polymers should not contribute more than 30wt% of the outer layer, preferably 20wt% or less.

In a highly preferred embodiment however, the outer layer consists essentially of LLDPE polymer(s) (of which at least one is a single site produced LLDPE). Non single site LLDPE's can form up to 50 wt%, preferably no more than 30wt% of the outer layer, preferably 20wt% or less, especially 5 to 15 wt% of the outer layer.

By consists essentially of LLDPE polymer(s) is meant that an LLDPE polymer or mixture of LLDPE polymers are the only polyolefins present in the layer. The layer is therefore free of other polyolefins such as LDPE. The "consisting essentially of " wording allows however, for the outer layer to contain standard polymer additives, typically in small amounts, as is well known in the art. Such additives are described in detail below.

As used herein, a single site produced LLDPE polymer is an ethylene copolymer having a density of 940 kg/m³ or less. From hereon, single site produced LLDPE's are called mLLDPE's. These mLLDPE's can be made using single site catalyst technology, especially metallocene catalyst technology. The use of single site catalysis, especially metallocene catalysis, to make LLDPE's which are multimodal or unimodal with respect to weight average molecular weight distribution, are known and widely described in the literature. The mLLDPE of the invention is preferably unimodal, but naturally is not limited thereto.

Preferred mLLDPE's may have a density 905-940 kg/m³, preferably in the range of from 915 to 934 kg/m³, such as 918 to 934 kg/m³, e.g. 920 to 930 kg/m³ (ISO 1183).

The mLLDPE is formed from ethylene along with at least one C₃₋₁₂ alphaolefin comonomer, e.g. 1-butene, 1-hexene or 1-octene. Preferably, the mLLDPE is a binary copolymer, i.e. the polymer contains ethylene and one comonomer, or a terpolymer, i.e. the polymer contains ethylene and two or three comonomers. Preferably, the mLLDPE comprises an ethylene hexene copolymer, ethylene octene copolymer or ethylene butene copolymer. The amount of comonomer present in the mLLDPE is preferably 0.5 to 12 mol%, e.g. 2 to 10% mole, especially 4 to 8% mole. Alternatively viewed comonomer contents present in the mLLDPE may be 1.5 to 10 wt%, especially 2 to 8 wt%.

The MFR₂ (melt flow rate ISO 1133 at 190°C under a load of 2.16 kg) of mLLDPE's of use in the outer layer should preferably be in the range 0.01 to 20 g/10min, e.g. 0.5 to 10, preferably 0.8 to 6.0, e.g. 0.9 to 2.0 g/10min.

The mLLDPE should preferably have a weight average molecular weight (Mw) of 100,000-250,000, e.g. 110,000-160,000 (GPC).

The mLLDPE may be unimodal or multimodal, preferably unimodal. By unimodal is meant that the molecular weight profile of the polymer comprises a single peak and is produced by one reactor and one catalyst

These unimodal mLLDPE polymers preferably posses narrow molecular weight distribution. The Mw/Mn value should preferably be 2 to 10, e.g. 2.2 to 4 (GPC).

The outer layer comprises at least one mLLDPE polymer, e.g. two mLLDPE polymers. In a highly preferred embodiment, however the outer layer contains a mixture of LLDPE's, one mLLDPE and one other LLDPE, e.g. two different unimodal mLLDPE's or two different multimodal mLLDPE's. Highly preferably, the outer layer contains both unimodal and multimodal LLDPE polymers. In a most preferred embodiment, the outer layer contains an mLLDPE and another LLDPE made using a Ziegler-Natta catalyst (a znLLDPE). Most preferably, the outer layer contains a unimodal mLLDPE and a multimodal znLLDPE.

If the outer layer, or, as stated above, the inner layer, or the BLEND of the invention, contains a znLLDPE this can be unimodal or multimodal with respect to weight average molecular weight distribution.

A multimodal LLDPE, preferably znLLDPE, may have a density as described above, i.e. no more than 940 kg/m³, e.g. 905-940 kg/m³, preferably in the range of from 915 to 934 kg/m³, such as 918 to 934 kg/m³, e.g. 920 to 930 kg/m³ (ISO 1183).

The MFR₂ of the multimodal LLDPE, preferably znLLDPE, is preferably be in the range 0.01 to 20 g/10min, e.g. 0.5 to 10, preferably 0.8 to 6.0, e.g. 0.9 to 2.0 g/10min. For znLLDPE's in particular, MFR₂ is most preferably in the range 0.05 to 1.5 g/10min, e.g. 0.1-1.2 g/10min.

The MFR₂₁ for znLLDPE's should be in the range 5 to 150, preferably 10 to 100 g/10min, e.g. 15 to 60 g/10 min. The Mw of multimodal znLLDPE's should be in the range 150,000 to 300,000, preferably 200,000 to 270,000. The Mw/Mn for multimodal znLLDPE's should be in the range 10 to 30, e.g. 15 to 25.

The znLLDPE may formed from ethylene along with at least one C₃₋₁₂ alphaolefin comonomer, e.g. 1-butene, 1-hexene or 1-octene. Preferably, the znLLDPE is a binary copolymer, i.e. the polymer contains ethylene and one comonomer, or a terpolymer, i.e. the polymer contains ethylene and two or three comonomers. Preferably, the znLLDPE comprises an ethylene hexene copolymer, ethylene octene copolymer or ethylene butene copolymer. The amount of comonomer present in the znLLDPE is preferably 0.5 to 12 mol%, e.g. 2 to 10% mole relative to ethylene, especially 4 to 8% mole. Alternatively viewed comonomer contents present in the znLLDPE may be 1.5 to 10 wt%, especially 2 to 8 wt% relative to ethylene.

In general a multimodal LLDPE (whether mLLDPE or znLLDPE) comprises at least a lower molecular weight component (LMW) and a higher molecular weight (HMW) component.

Usually, a LLDPE polymer comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, a polymer consisting of two fractions only is called "bimodal". The form of the molecular weight distribution curve, i.e. the appearance of the graph of the polymer weight fraction as function of its molecular weight, of a multimodal LLDPE will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal LLDPE there is by definition a lower molecular weight component (LMW) and a higher molecular weight component (HMW). The LMW component has a lower molecular weight than the higher molecular weight component. Preferably, in a multimodal LLDPE polymer of use in this invention at least one of the LMW and HMW components is a copolymer of ethylene. Further preferably, at least HMW component is an ethylene copolymer. Further preferably, also the lower molecular weight (LMW) component may be an ethylene copolymer. Alternatively, if one of the components is a homopolymer, then LMW is the preferably the homopolymer.

The term "ethylene copolymer" is again used in this context to encompass polymers comprising repeat units deriving from ethylene and at least one other C3-12 alpha olefin monomer. Preferred copolymers are binary and comprise a single comonomer or are terpolymers and comprise two or three comonomers. In any copolymeric HMW component, at least 0.25 mol-%, preferably at least 0.5 mol-%, e.g. at least 1-mol%, such as up to 10 mol-% of repeat units derive from the comonomer. Ethylene forms the majority of the HMW component.

In contrast the term "ethylene homopolymer" as used herein is intended to encompass polymers which consist essentially of repeat units deriving from ethylene. Homopolymers may, for example, comprise at least 99.8 %, preferably at least 99.9 %, by weight of repeat units deriving from ethylene. The following properties apply to multimodal znLLDPE's (and, if present, also for multimodal mLLDPE's) unless otherwise stated.

The lower molecular weight component preferably has a MFR₂ of at least 50, preferably at least 100 g/10min, preferably 110 to 3000 g/10min, e.g. 110 to 500 g/10min, especially 150 to 400 g/10min. The molecular weight of the low molecular weight component should preferably range from 20,000 to 50,000, e.g. 25,000 to 40,000.

The density of the lower molecular weight component may range from 930 to 980 kg/m³, e.g. 945 to 975 kg/m³ preferably 950 to 975 kg/m³, especially 960 to 975 kg/m³.

The lower molecular weight component should preferably form 30 to 70 wt%, e.g. 40 to 60% by weight of the multimodal LLDPE with the higher molecular weight component forming 70 to 30 wt%, e.g. 40 to 60% by weight.

The higher molecular weight component should have a lower MFR₂ and a lower density than the lower molecular weight component.

The higher molecular weight component should have an MFR₂ of less than 1 g/10 min, preferably less than 0.5 g/10 min, especially less than 0.2 g/10min, and a density of less than 915 kg/m³, e.g. less than 910 kg/m³, preferably less than 905 kg/m³. The Mw of the higher molecular weight component may range from 100,000 to 1,000,000, preferably 250,000 to 500,000.

Alternatively the multimodal LLDPE may comprise other polymer components, e.g. up to 10 % by weight of a well known polyethylene prepolymer (obtainable from a prepolymerisation step as well known in the art). In case of such prepolymer, the prepolymer component is comprised in one of LMW and HMW components, preferably LMW component, as defined above.

Unimodal LLDPE is preferably prepared using a single stage polymerisation, preferably a slurry polymerisation in slurry tank or loop reactor in a manner well known in the art. Preferably the unimodal mLLDPE is produced in a loop reactor. For the general principles reference is made below to the polymerisation of low molecular weight component in a multistage process with the exception that the process conditions (e.g. hydrogen and comonomer feed are adjusted to provide the properties of the final polymer).

Multimodal LLDPE polymers may be prepared for example by two or more stage polymerization or by the use of two or more different polymerization catalysts in a one stage polymerization. It is also possible to employ a multi- or dualsite catalyst. It is important to ensure that the higher and lower molecular weight components are intimately mixed prior to extrusion. This is most advantageously achieved by using a multistage process or a dual site.

Preferably the multimodal LLDPE is produced in a two-stage polymerization using the same catalyst, e.g. a metallocene catalyst or a Ziegler-Natta catalyst. Thus, two slurry reactors or two gas phase reactors could be employed. Preferably however, the multimodal LLDPE is made using a slurry polymerization in a loop reactor followed by a gas phase polymerization in a gas phase reactor.

A loop reactor - gas phase reactor system is marketed by Borealis as a BORSTAR reactor system. Any multimodal LLDPE of use in the outer layer is thus preferably formed in a two stage process comprising a first slurry loop polymerisation followed by gas phase polymerisation.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

Where the higher molecular weight component is made second in a multistage polymerisation it is not possible to measure its properties directly. However, the skilled man is able to determine the density, MFR₂ etc of the higher molecular weight component using Kim McAuley's equations. Thus, both density and MFR₂ can be found using K. K. McAuley and J. F. McGregor: On-line Inference of Polymer Properties in an Industrial Polyethylene Reactor, AIChE Journal, June 1991, Vol. 37, No, 6, pages 825-835.

The density is calculated from McAuley's equation 37, where final density and density after the first reactor is known.

MFR₂ is calculated from McAuley's equation 25, where final MFR₂ and MFR₂ after the first reactor is calculated. The use of these equations to calculate polymer properties in multimodal polymers is common place.

The multimodal LLDPE may be made using conventional single site or Ziegler-Natta catalysis as is known in the art. The Ziegler Natta and single site catalyst used for making the desired component is not critical. Thus any catalyst including Ziegler Natta catalyst and single site catalyst (including well known metallocenes and non-metallocenes) are used.

In case of mLLDPE, metallocene catalysis is preferably used. The preparation of the metallocene catalyst can be carried out according or analogously to the methods known from the literature and is within skills of a person skilled in the field. Thus for the preparation see e.g. EP-A-129 368, WO-A-9856831, WO-A-0034341, EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130. WO2005/002744 describes a preferable catalyst and process for preparing the mLLDPE component.

In case of znLLDPE the polyethylene polymer composition is manufactured using Ziegler-Natta catalysis. Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO O1/55230, EP 810235 and WO 99/51646. The catalysts disclosed in WO 95/35323 are especially useful as they are well suited in production of both a polyethylene having a high molecular weight and a polyethylene having a low molecular weight. Thus, especially preferably the transition metal component comprises a titanium halide, a magnesium alkoxy alkyl compound and an aluminium alkyl dihalide supported on an inorganic oxide carrier.

In one embodiment a catalyst of Ziegler Natta type, wherein the active components are dispersed and solidified within Mg-based support by the emulsion/solidification method adapted to PE catalyst, e.g. as disclosed in WKO03106510 of Borealis, e.g. according to the principles given in the claims thereof.

In another preferable embodiment, the catalyst is a non-silica supported catalyst, i.e. the active components are not supported to an external silica support. Preferably, the support material of the catalyst is a Mg-based support material. Examples of such preferred Ziegler-Natta catalysts are described in EP 0 810 235. Multimodal (e.g. bimodal) polymers can also be made by mechanical blending of the polymer in a known manner.

In a very preferable embodiment of the invention the polyethylene composition is produced using a ZN catalysts disclosed in EP 688794.

Conventional cocatalysts, supports/carriers, electron donors etc can be used. Many multimodal or bimodal LLDPE's are commercially available.

In a highly preferred embodiment the outer layer contains a unimodal single site manufactured LLDPE and a multimodal Ziegler-Natta prepared LLDPE.

Where a mixture of LLDPE's is employed, in particular when a mixture of unimodal and multimodal LLDPE's is employed, these may be present in a ratio of 1 :99 to 99:1 by weight, e.g. 5 to 95 to 95 to 5. Preferably the unimodal component is in excess, e.g. at least 70:30, preferably at least 80:20, especially at least 85:15 unimodal to multimodal components.

The outer layer may also contain conventional additives such as antioxidants, UV stabilisers, acid scavengers, nucleating agents, anti-blocking agents, slip agents etc as well as polymer processing agent (PPA).

Preferred multilayer films of the invention also comprise an inner layer. Any inner layer of the multilayer film preferably independently has the properties defined above for the outer layer. Preferably, outer and inner layers are identical.

The core layer or the BLEND of the film contains at least one ethylene acrylate copolymer polymer. Such a polymer is therefore formed from an ethylene monomer and an acrylate monomer (and other further comonomers if desired). Preferably, the core layer contains an ethylene alkyl acrylate polymer (e.g. an ethylene C₁₋₁₀ alkyl acrylate polymer). Preferred ethylene alkyl acrylate polymers are ethylene methyl acrylate, ethylene ethyl acrylate and ethylene butyl acrylate (EBA), especially EBA. The acrylate content of the ethylene acrylate copolymer may be in the range 1 to 40 wt%, preferably 2 to 30 wt%, more preferably 3 to 20 %, especially 5 to 15 wt%. The ethylene acrylate copolymers are very well known and can be produced preferably in a high pressure polymerisation using organic peroxides in a manner well known in the art.

It has been found that there is a relationship between acrylate content, elasticity and holding force. As acrylate content increases, elasticity increases but holding force decreases.

It has also been found that sec modulus decreases with increasing acrylate content and puncture energy generally increases with increasing acrylate content. Depending on the desired end use of the material and which property is deemed of particular importance for a particular film, it is possible therefore to tailor the properties of the film by manipulation of the acrylate content of the ethylene acrylate copolymer in the core layer.

The ethylene acrylate copolymer preferably forms at least at least 50 wt% of the core layer, preferably at least 60% wt, more preferably at least 70 wt%, especially at least 80wt% of the core layer. The core layer can comprise other polymer components such as low density polyethylene (LDPE), high density polyethylene (HDPE) or a LLDPE polymer, e.g. as described above. If present, such polymers should not contribute more than 30wt% of the outer layer, preferably 20wt% or less of the core layer.

In a highly preferred embodiment, the core layer consists essentially of ethylene acrylate copolymer(s). Most preferably the core layer consists essentially of EBA.

Again, the use of "consists essentially of" wording is intended to exclude the presence of other polyolefin components but allow the presence of standard polymer additives. Conventional additives such as antioxidants, UV stabilisers, acid scavengers, nucleating agents, anti-blocking agents etc as well as polymer processing agent (PPA) could be present.

The density of the ethylene acrylate copolymer may be in the range 905-940 kg/m³, preferably in the range of from 915 to 934 kg/m³, such as 918 to 930 kg/m³.

The MFR₂ (melt flow rate ISO 1133 at 190°C under a load of 2.16 kg) of ethylene acrylate copolymers of use in the core layer should preferably be in the range 0.01 to 20 g/10min, e.g. 0.05 to 10, preferably 0.1 to 5.0, e.g. 0.2 to 4.0 g/10min.

The Vicat softening temperatures of the ethylene acrylate copolymer may be in the range 70 to 100°C. The melting point (DSC) of the ethylene acrylate copolymer may be in the range 80 to 120°C.

Whilst the bulk of the description above concerns the formation of multilayer films, it is envisaged that monolayer films could also be formed into stretch hoods. In this situation, the components necessary to form the films and hence stretch hoods of the invention can be blended and then extruder by conventional techniques.

The blend needed to form a monolayer film should comprise an ethylene acrylate copolymer and at least one mLLDPE polymer. As described above, the blend should preferably comprises a mixture of LLDPE polymers containing at least one mLLDPE, in particular a mixture of unimodal and multimodal LLDPE polymers, especially a unimodal mLLDPE and a multimodal Ziegler Natta LLDPE.

Thus, viewed from another aspect the invention provides in particular, a film comprising a mixture of a unimodal mLLDPE and multimodal znLLDPE and a ethylene acrylate copolymer.

The blend of mLLDPE and ethylene acrylate copolymer is also new and forms a further aspect of the invention. The invention therefore provides a composition comprising at least one single site produced LLDPE and an ethylene acrylate copolymer, optionally further comprising at least one Ziegler-Natta produced LLDPE.

For the composition and monolayer film aspects of the invention, preferred LLDPE's and acrylate copolymers described above in connection with the multilayer film can be employed.

In a monolayer film/composition of the invention the weight ratio of all LLDPE components to acrylate copolymer components may be in the range 1:10 to 10:1, e.g. 1:5 to 5:1. Preferably, the acrylate copolymer is in excess, e.g. 75 to 55% acrylate to 25 to 45% LLDPE.

The ratios of LLDPE components to each other described above in connection with the outer layer apply to the composition and monolayer film embodiments. Thus, where a mixture of LLDPE's is employed, in particular when a mixture of unimodal and multimodal LLDPE's is employed, these may be present in a ratio of 1:99 to 99:1 by weight, e.g. 5 to 95 to 95 to 5. Preferably, any unimodal component is in excess, e.g. at least 70:30, preferably at least 80:20, especially at least 85:15 unimodal to multimodal components.

LLDPE polymers, whether mLLDPE's of znLLDPE's, whether unimodal or multimodal, of use in this invention are commercially available from Borealis and other suppliers.

Films and stretch hoods of the invention are preferably free of ethylene acid copolymers (EAA's).

The films of the invention may have a thickness of 10 to 250 µm, preferably 20 to 200 µm, preferably 30 to 175 µm. The outer, inner and core layers may all be of equal thickness or alternatively the core layer may be thicker than outer and inner layers. A convenient film comprises outer/inner layers which each form 10 to 35%, e.g. 15 to 25% of the thickness of the film, the core layer forming the remaining thickness, e.g. 30 to 70%, preferably 50 to 70%.

Overall, the acrylate content of the films of the invention may be in the range 3 to 15%wt, preferably 4 to 10 %wt.

For film formation using a polymer mixture it is important that the different polymer components be intimately mixed prior to extrusion and blowing of the film as otherwise there is a risk of in homogeneities, e.g. gels, appearing in the film. Thus, it is especially preferred to thoroughly blend the components, for example using a twin screw extruder, preferably a counter-rotating extruder prior to extrusion and film blowing. Sufficient homogeneity can also be obtained by selecting the screw design for the film extruder such that it is designed for good mixing and homogenising.

The film of the invention will typically be produced by extrusion through an annular die, blowing into a tubular film by forming a bubble which is collapsed between nip rollers after solidification. This film can then be slit, cut or converted (e.g. gusseted) as desired. Conventional film production techniques may be used in this regard. Typically the blend/outer/inner and core layer mixtures will be coextruded at a temperature in the range 160°C to 240°C, and cooled by blowing gas (generally air) at a temperature of 10 to 50°C to provide a frost line height of 1 or 2 to 8 times the diameter of the die. The blow up ratio should generally be in the range 1.5 to 4, e.g. 2 to 4, preferably 2.5 to 3.5.

The Stretch hoods are tubular films as obtained from the film blowing which either are pre-sealed and perforated in-line during film production or off-line or more typically sealed and cut in the packaging machine operation to fit the specific pallet dimensions. The tubular film is furthermore stretched to open the tube sufficiently and pulled and simultaneously stretched vertically downwards over the loaded pallet so that the end of the film covers the load fully and the bottom pallet partly.

The films/stretch hoods of the invention exhibit a remarkable combination of elasticity, holding force and puncture properties as described below.

Where the film properties below are film thickness/preparation dependent, then the general definitions for film properties apply to films made with a thickness of 120µm made according to method described under "Preparation Method of Film Samples" as described in example 3 using a Blow up ratio of 3 and layer distribution of 20/60/20. Further information for samples used for different property determinations are given, if needed, under the description of determination methods.

As mentioned above, the films of the invention show remarkable puncture properties. The films of the invention exhibit high puncture resistance. Puncture resistance may be at least 120 N, preferably at least 160N, more preferably at least 200N. The upper limit may be 500N (ASTM D5748).

The films of the invention exhibit high puncture deformation. Puncture deformation may be at least 50 mm, preferably at least 75 mm, more preferably at least 80 mm, especially at least 110mm, more especially at least 120 mm, most especially at least 130 mm (ASTM D 5748). The upper limit of puncture deformation may be 300 mm.

The films of the invention exhibit high puncture energy. Puncture energy may be at least 5J, preferably at least 8J, more preferably at least 10J, especially 12J, most especially at least 15J (ASTM D 5748). The upper limit of puncture energy may be 40J.

The elasticity properties of the films of the invention are also important and surprisingly good. Elasticity (measured according to the test in the examples section) may be at least 10N, preferably at least 12N, especially at least 14N. The upper limit may be e.g. 20N.

Elmendorf Tear resistances in the machine direction may be at least 8 N, preferably at least 9N.

1% Secant modulus properties (ASTM D882) in the transverse direction should be at least 70 MPa, the upper limit preferably being below 250 MPa, more preferably below 170 MPa, depending on the desired end application. Further preferably said tensile modulus is between 80 to 140 MPa.

The films may have high holding force (measured according to the test in the examples section) of at least 6N, preferably at least 7 N, more preferably at least 8N, more preferably at least 8.5N. The preferable upper limit may be 10 N.

The films may also possess a broad sealing window, e.g. greater than 10°C, preferably greater than 15°C, especially greater than 25°C.

The coefficient of friction of the films of the invention may be less than 1 on the outside preferably less than 0.75. On the inside of the film, the CoF may be less than 0.5, preferably less than 0.4.

Without wishing to be limited by theory, it is believed that the combination of polymers used to manufacture the films of the invention gives rise to an ideal balance of properties. The acrylate copolymer contributes to the necessary elasticity whilst the unimodal mLLDPE contributes to excellent optical properties and holding force. The multimodal znLLDPE can aid low surface friction and processability.

The films of the invention may incorporate barrier layers as is known in the art. For certain applications for example, it may be necessary to incorporate a barrier layer, i.e. a layer which is impermeable to water and oxygen, into the film structure. This can be achieved using conventional lamination techniques. Suitable barrier layers are known and include polyamide, ethylene vinyl alcohol, PET and metallised Al layers. Preferably however, no barrier layer is present.

The films of the invention have a wide variety of applications but are of particular interest in the formation of stretch hoods.

The invention will now be described further with reference to the following non-limiting examples and Figures.

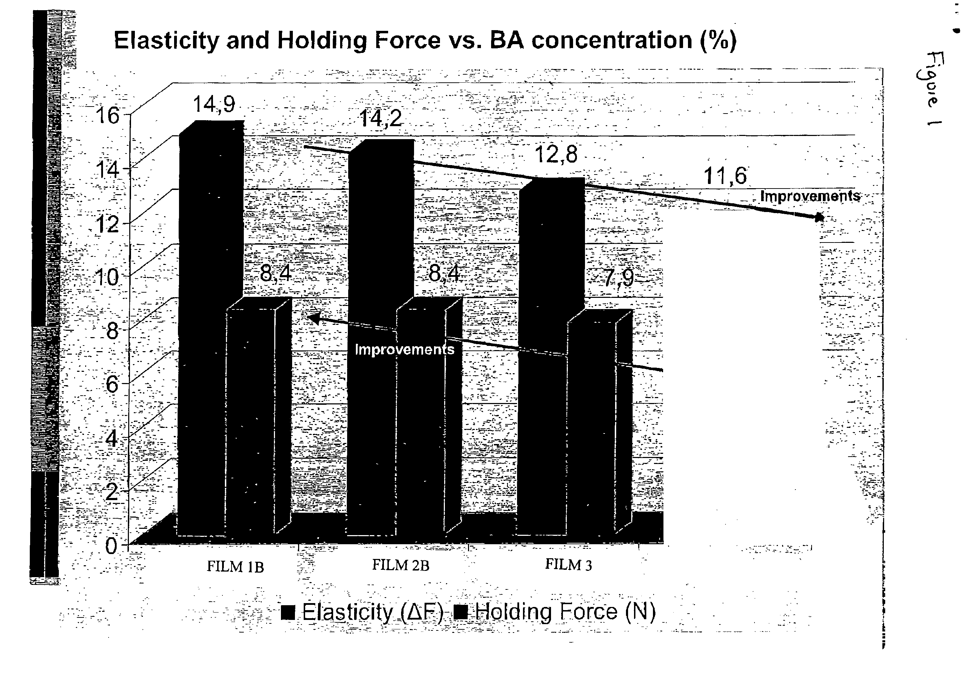

Figure 1 shows the relationship between butyl acrylate content, holding force and elasticity for various films of the invention.

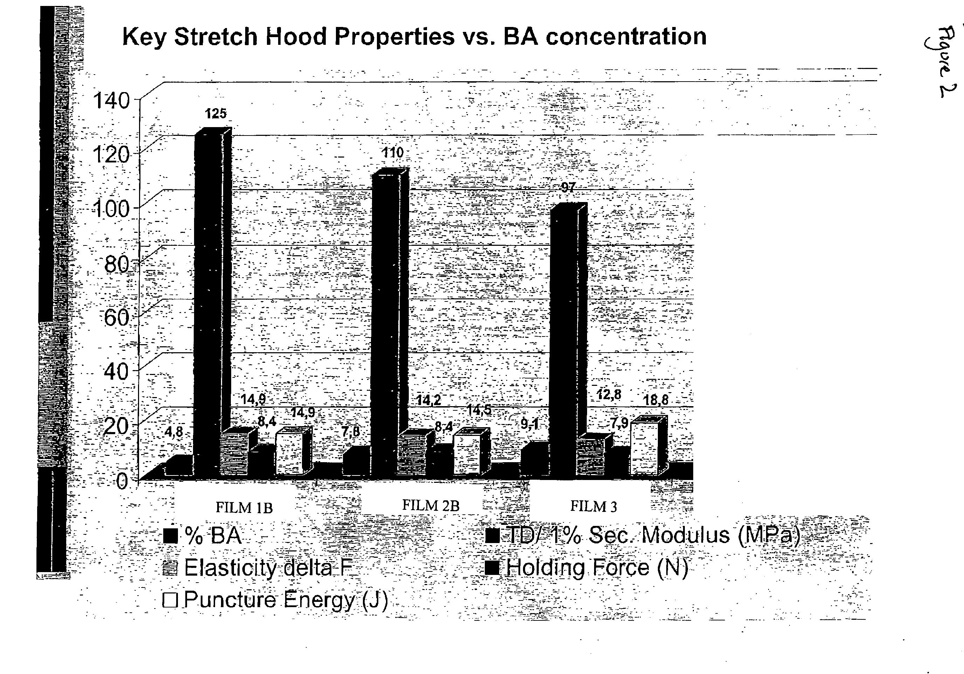

Figure 2 shows the relationship between butyl acrylate content, holding force, sec modulus, puncture energy and elasticity for various films of the invention.

### Analytical Tests

The following methods were used to measure the properties that are defined generally above and in examples below. The material and film samples used for the measurements and definitions were prepared as described under the particular method or in tables.
**Density** of the materials is measured according to ISO 1183:1987 (E), method D, with isopropanol-water as gradient liquid. The cooling rate of the plaques when crystallising the samples was 15 C/min. Conditioning time was 16 hours.
**Tensile modulus** (secant modulus, 0.05-1.05%) is measured according to ASTM D 882-A on 30 µm films. The speed of testing is 5mm/min. The test temperature is 23°C. Width of the film was 25 mm.
**MFR2/21** are measured according to ISO 1133 at 190°C at loads of 2.16 and 21.6 kg respectively.
**Haze** is measured according to ASTM D 1003
**Gloss** is measured according to ASTM D 2457
**Tensile Strain at break and tensile strength** are measured according to ISO 527-3. The speed of testing is 500 mm/min. The test temperature is 23°C. Width of the film was 25 mm.
**Tensile Stress at yield** is measured according to ISO 527-3. The test temperature is 23°C. Width of the film was 25 mm.
**Impact resistance** is determined on Dart-drop (g/50%). Dart-drop is measured using ISO 7765-1, method "A". A dart with a 38 mm diameter hemispherical head is dropped from a height of 0.66 m onto a film clamped over a hole. If the specimen fails, the weight of the dart is reduced and if it does not fail the weight is increased. At least 20 specimens are tested. The weight resulting in failure of 50% of the specimens is calculated.
**Puncture resistance** (determined in Ball puncture (energy/J) at +23°C. The method is according to ASTM D 5748. Puncture properties (resistance, energy to break, penetration distance) are determined by the resistance of film to the penetration of a probe (19 mm diameter) at a given speed (250mm/min).
**Tear resistance (determined as Elmendorf tear (N))**
   The tear strength is measured using the ISO 6383/2 method. The force required to propagate tearing across a film specimen is measured using a pendulum device. The pendulum swings under gravity through an arc, tearing the specimen from pre-cut slit. The specimen is fixed on one side by the pendulum and on the other side by a stationary clamp. The tear strength is the force required to tear the specimen.
**Molecular weights, molecular weight distribution, Mn, Mw, MWD**
   Mw/Mn/MWD are measured by GPC according to the following method: The weight average molecular weight Mw and the molecular weight distribution (MWD = Mw/Mn wherein Mn is the number average molecular weight and Mw is the weight average molecular weight) is measured by a method based on ISO 16014-4:2003. A waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Howinks constant K: 9.54*10⁻⁵ and a: 0.725 for PS, and K: 3.92*10⁻⁴ and a: 0.725 for PE). Equipment: Alliance 2000 GPCV (W4410), detector: Refractive index and Visc-detector.
**Relaxation method:** This method was developed to this stretch hood application to describe and measure the elasticity and holding force, i.e. residual force, of the film. The instrument used was a commercial Tensile instrument, 5 kN, supplier Hansfield, England.
   Samples prepared as described below in tables. The samples were cut in transverse direction to dimensions of 100 mm of length and of 25 mm of width. The method steps:
   1- The film was stretched up to 50% with the speed of 1000mm/min
   2- After waiting for 10s , force, F1, of the sample was registered
   3- The sample was relaxed back to 30% with speed of 50mm/min, where after force, F2, of the sample was registered
   4-After waiting for 60s force, F3, of the sample was registered
**Elasticity** is a result of the calculation of the difference of F2 - F1 (= Elasticity of the film, N)
**Holding force** of the sample is the value of force, F3, N
**Thermal properties** were measured according to ISO 11357-1 on a Perkin Elmer DSC-7. Heat from -10°C to 200°C at 10°C/min. Hold for 10 min at 200°C. Cool from 200°C to -10°C per min.
**Film appearance** was assessed visually

### Example 1: preparation of bimodal LLDPE using Ziegler-Natta catalyst

### Example 1a (Preparation of the catalyst)

### Complex preparation:

87 kg of toluene was added into the reactor. Then 45.5 kg Bomag A in heptane was also added in the reactor. 161 kg 99.8 % 2-ethyl-1-hexanol was then introduced into the reactor at a flow rate of 24-40 kg/h. The molar ratio between BOMAG-A and 2-ethyl-1-hexanol was 1:1.83.

### Solid catalyst component preparation:

275 kg silica (ES747JR of Crossfield, having average particle size of 20 µm) activated at 600 °C in nitrogen was charged into a catalyst preparation reactor. Then, 411 kg 20 % EADC (2.0 mmol/g silica) diluted in 555 litres pentane was added into the reactor at ambient temperature during one hour. The temperature was then increased to 35 °C while stirring the treated silica for one hour. The silica was dried at 50 °C for 8.5 hours. Then 655 kg of the complex prepared as described above (2 mmol Mg/g silica) was added at 23 °C during ten minutes. 86 kg pentane was added into the reactor at 22 °C during ten minutes. The slurry was stirred for 8 hours at 50 °C. Finally, 52 kg TiCl₄ was added during 0.5 hours at 45 °C. The slurry was stirred at 40 °C for five hours. The catalyst was then dried by purging with nitrogen.

### Example 1b: polymerisation process

The ZN LLDPE used in the examples was produced in pilot plant multistage reaction comprising a prepolymerisation stage in slurry in a 50 dm³ loop reactor at 80°C in a pressure of 65 bar using the polymerisation catalyst prepared according to Example 1a and triethylaluminium cocatalyst. The molar ratio of aluminium of the cocatalyst to titanium of the catalyst was 20. Ethylene was fed in a ratio of (200g of C2)/(1g/catalyst). Propane was used as the diluent and hydrogen was feeded in amount to adjust the MFR2 of the prepolymer to about 10 g/10 min. The obtained slurry was transferred into a 500 dm³ loop reactor, operated at 85 °C temperature and 60 bar pressure, was continuously introduced propane diluent, ethylene, hydrogen and 1-butene comonomer in such flow rates that ethylene content in the reaction mixture was 6.4 mol-%, the mole ratio of hydrogen to ethylene was 150 mol/kmol and the mole ratio of 1-butene to ethylene was 730 mol/kmol. The continuous feed of prepolymerised catalyst was adjusted in such quantities that ethylene polymer was produced at a rate of 28 kg/h. The polymer had an MFR₂ of 100 g/10 min and density of 946 kg/m³.

The polymer was withdrawn from the loop reactor by using settling legs, and the polymer slurry was introduced into a flash tank operated at 3 bar pressure and 20 °C temperature.

From the flash tank the polymer was introduced into a fluidised bed gas phase reactor, which was operated at 80 °C temperature and 20 bar pressure. Into the gas phase reactor were additional ethylene, hydrogen and 1-butene introduced, as well as nitrogen flushes to keep the connections and piping open. Consequently, the concentration of ethylene in the reactor gas was 20 mol-%, the molar ratio of hydrogen to ethylene was 4 mol/kmol and the molar ratio of 1-butene to ethylene was 580 mol/kmol. The polymer was withdrawn from the reactor at a rate of 67 kg/h. After collecting the polymer it was blended with conventional additives (stabiliser and polymer processing aid) and extruded into pellets in a counterrotating twin-screw extruder JSW CIM90P. The resulting multimodal znLLDPE had an MFR₂ of 0.4 g/10 min and density of 923 kg/m³. The split between the polymer produced in the loop reactor and the polymer produced in the gas phase reactor was 45/55.

**Example 2: Preparation of unimodal LLDPE using metallocene catalyst** Bis(n-butylcyclopentadienyl) hafnium dibenzyl catalyst was prepared as described in Example 2 of WO2005/002744.

The mLLDPE used in the below film examples was produced as follows:
Ethylene hexene resins were produced using bis(n-butylcyclopentadienyl) hafnium dibenzyl catalyst in a slurry loop reactor at the following conditions:

| | |
|---|---|
| Pressure | 42 bar |
| C2 amount | 4 wt% |
| C6/C2: | 0.35 |
| Temp. | 86°C |
| Residence time: | 40 to 60 mins |

After collecting the polymer it was blended with conventional additives (stabiliser and polymer processing aid) and extruded into pellets in a counterrotating twin-screw extruder JSW CIM90P. The obtained unimodal mLLDPE polymer had the density of 922 kg/m³ and MFR₂ of 1.3 g/10min.

In film example no. 4 in table 2 below the mLLDPE of example 2 was used together with a commercially available slip agent, which was added in an amount of 800 ppm, and a commercially available anti-block agent, which was added in an amount of 200 ppm, of the final polymer composition. This mLLDPE composition of example 2 was referred as Example 2*.

**Example 3**: Ethylene butyl acrylate grades were prepared in a commercial scale high pressure (HP) autoclave polymerisation process of ethylene together with butyl acrylate comonomer in a conventional manner using organic peroxide as the initiator. The process conditions were adjusted in a known manner to obtain following ethylene butyl acrylate (EBA) copolymers used in the below film examples (EBA's are commercially well known materials):

**Table 1**

| Grade | Density | MFR₂ | Butyl acrylate % | Vicat Softening point °C | DSC melting point °C |
|---|---|---|---|---|---|
| C | 923 | 0.45 | 8 | 83 | 101 |
| D | 923 | 0.25 | 8 | 84 | 102 |
| E | 925 | 0.4 | 13 | 76 | 97 |

The reference example was a commercially available film material used conventionally for stretch hood applications, i.e. palletising plastic bags.

**Preparation Method of Film Samples:** The film samples of the invention and of the reference example described below in table 2 were coextruded on a 3-layer Windmöller&Hölscher coextrusion line with die diameter 200 mm, at a blow up ratio (BUR) as shown in the table 2, frost line height 600 mm, Die gap 1.2 mm, Extruder temp setting : 210°C to form a 120 µm film. Film data is presented in Table 3.

**Table 2**

| | ABC coextrusion & compositions | | | | |
|---|---|---|---|---|---|
| Film No: | A/ outer layer | B/ middle layer | C/ inner layer | Layer distribution | Total thickness |
| 1a. | 90% Ex 2 + 10% Ex 1 | 100% D | 90% Ex 2 + 10% Ex 1 | (20/60/20) BUR = 3 | 120µm |
| 1b. | 90% Ex 2 + 10% Ex 1 | 100% D | 90% Ex 2 + 10% Ex 1 | (20/60/20) BUR = 3.5 | 120µm |
| 2a | 90% Ex 2 + 10% Ex 1 | 100% E | 90% Ex 2 + 10% Ex 1 | (20/60/20) BUR = 3 | 120µm |
| 2b | 90% Ex 2 + 10% Ex 1 | 100% E | 90% Ex 2 + 10% Ex 1 | (20/60/20) BUR = 3.5 | 120µm |
| 3 | 90% Ex 2 + 10% Ex 1 | 100% E | 90% Ex 2 + 10% Ex 1 | (15/70/15) BUR = 3.5 | 120µm |
| 4. | 90% Ex 2 + 10% Ex 1 | 100% C | 90% Ex 2* + 10% Ex 1 | (20/60/20) BUR = 3.5 | 120µm |

| | | | | | |
|---|---|---|---|---|---|
| BUR : Blow up ratio | | | | | |

**Table 3**

| Film properties | Film 1a | Film 1b | Film 2b | Film 3 | Film 4 | REF. EX |
|---|---|---|---|---|---|---|
| Film thickness/ Average, µm | 120 | 120 | 120 | 120 | 120 | 120 |
| Film stiffness/TD-1% Secant modulus, MPa | 120 | 125 | 110 | 97 | 130 | 106 |
| Holding force, N | 8.8 | 8.4 | 8.4 | 7.9 | 9.6 | 8.4 |
| Elasticity delta F, N | 16.8 | 14.9 | 14.2 | 12.8 | 15.0 | 13 |
| Puncture Resistance, N | 182 | 198 | 180 | 205 | 235 | 95 |
| Penetration distance= Deformation, mm | 120 | 125 | 135 | 142 | 145 | 60 |
| Energy to break, J | 13.2 | 14.9 | 14.5 | 18.8 | 20.0 | 4.9 |
| MD- Tear Resistance, N | 14.4 | 9.5 | 12.5 | 9.7 | 11.0 | 12.7 |
| Dynamic friction (COF) | 0.52 | 0.5 | 0.43 | 0.49 | 0.40 | 0.24 |
| Stretch hood appearance | transparent | transparent | transparent | transparent | transparent | Transparent |

| | | | | | | |
|---|---|---|---|---|---|---|
| The Ref Ex film is formed from a commercially available Ethylene vinyl acetate polymer | | | | | | |

## Claims

1. A film, e.g. a monolayer film, comprising at least one single site produced LLDPE (mLLDPE) and an ethylene acrylate copolymer.

2. A film as claimed in claim 1 being a multilayer film comprising at least two layers, an outer layer and a core layer;
said outer layer comprising at least one mLLDPE polymer; and
said core layer comprising an ethylene acrylate copolymer.

3. A multilayer film as claimed in claim 2 comprising at least three layers, an outer layer, a core layer and an inner layer;
said outer layer and said inner layer independently comprising at least one mLLDPE polymer; and
said core layer comprising an ethylene acrylate copolymer.

4. A film as claimed in any one of claims 1 to 3 further comprising a znLLDPE.

5. A film as claimed in any preceding claim comprising a unimodal LLDPE and a multimodal LLDPE.

6. A film as claimed in any preceding claim comprising a unimodal mLLDPE and a multimodal znLLDPE.

7. A film as claimed in any preceding claim comprising an ethylene alkyl acrylate polymer.

8. A film as claimed in any preceding claim comprising ethylene butyl acrylate.

9. A film as claimed in any preceding claim wherein said mLLDPE has a density of 915 to 934 kg/m3 and a MFR2 of 0.5 to 10 g/10 min.

10. A film as claimed in any preceding claim comprising a puncture resistance of at least 120 N (ASTM D5748).

11. A film as claimed in any preceding claim comprising a puncture deformation of at least 50 mm. (ASTM D 5748).

12. A film as claimed in any preceding claim comprising a puncture energy of at least 5J (ASTM D 5748).

13. A film as claimed in any preceding claim comprising an elasticity of at least 10N.

14. A film as claimed in any preceding claim comprising 1% Secant modulus properties (ASTM D882) in the transverse direction of at least 70 MPa.

15. A film as claimed in any preceding claim comprising a holding force of at least 6N.

16. A process for the preparation of a multilayer film as hereinbefore described comprising coextruding
A) a composition comprising at least one single site catalyst produced LLDPE polymer to form an outer layer; and
B) a composition comprising an ethylene acrylate copolymer to form a core layer.

17. Use of a film as claimed in claim 1 to 15 in packaging.

18. An article packaged using a film as claimed in claim 1 to 15.

19. A stretch hood formed from a film as claimed in claim 1 to 15.

20. A composition comprising at least one single site produced LLDPE and an ethylene acrylate copolymer, optionally further comprising at least one Ziegler-Natta produced LLDPE.
